# EUROPEAN PATENT APPLICATION

(11) **EP 4 450 468 A1**
(43) Date of publication of application: **23.10.2024**
(21) Application number: 22907475.2
(22) Date of filing: 14.12.2022
(51) Int. Cl.: C03C 17/42, F24C 15/10

(54) **HEAT RESISTANT GLASS AND TOP PLATE FOR COOKING INSTRUMENT**

(30) Priority: 16.12.2021 JP 2021204383
(71) Applicant: Nippon Electric Glass Co., Ltd., Otsu-shi, Shiga 520-8639 (JP)
(72) Inventor: FUKUI, Etsuji, Otsu-shi, Shiga 520-8639 (JP)
(74) Representative: Tetzner, Michael
(86) International application number: PCT/JP2022/045997
(87) International publication number: WO 2023/112951

(57) **Abstract**

Provided is a heat-resistant glass capable of suppressing discoloration of a decorated layer even when exposed to a high-temperature environment, such as when used in a heating cooker. A heat-resistant glass 1 for use in a heating cooker includes: a glass substrate 2; and a decorated layer 3 provided on one principal surface 2b of the glass substrate 2, wherein the decorated layer 3 includes: a heat-resistant resin layer 5; and surface-coated titanium oxide including titanium oxide and a coating layer at least partially coating a surface of the titanium oxide.

## Description

### [Technical Field]

The present invention relates to heat-resistant glasses for use in heating cookers. Furthermore, the present invention relates to cooker top plates in which the heat-resistant glass is used.

### [Background Art]

A heat-resistant glass is used in a heating cooker. A heat-resistant glass for use in a heating cooker generally includes: a glass substrate having high heat resistance; and a heat-resistant resin layer provided on the glass substrate.

A top plate for a cooker is known as an example of the heat-resistant glass for use in a heating cooker. The top plate for a cooker is provided on the top of an electromagnetic cooker, a radiant heater cooker, a gas cooker or other type of cooker.

Since the top plate for a cooker includes the above-described heat-resistant resin layer, it has high heat resistance. Furthermore, when the top plate for a cooker includes a decorated layer including the above heat-resistant resin layer, it can hide the internal structure of the cooker and make the design of the cooker more attractive. Therefore, the decorated layer generally contains a pigment, such as a color pigment (see, for example, Patent Literature 1).

### [Citation List]

### [Patent Literature]

[PTL 1]
JP-A-2005-298266

### [Summary of Invention]

### [Technical Problem]

As regards the foregoing, in many cases, a decorated layer of a heat-resistant glass, such as a top plate for a cooker, is provided on the side thereof close to a heating device. Therefore, under a high-temperature environment, such as during use of the heating cooker, the decorated layer may discolor and, thus, the heat-resistance glass may be impaired in aesthetic property.

An object of the present invention is to provide a heat-resistant glass capable of suppressing discoloration of a decorated layer even when exposed to a high-temperature environment, such as when used in a heating cooker. Furthermore, the present invention also aims at providing a top plate for a cooker in which the above-described heat-resistant glass is used.

### [Solution to Problem]

A description will be given below of aspects of a heat-resistant glass that can solve the above problem and a top plate for a cooker.

A heat-resistant glass of Aspect 1 in the present invention is a heat-resistant glass for use in a heating cooker and includes a glass substrate and a decorated layer provided on one of principal surfaces of the glass substrate, wherein the decorated layer includes: a heat-resistant resin layer; and surface-coated titanium oxide including titanium oxide and a coating layer at least partially coating a surface of the titanium oxide.

A heat-resistant glass of Aspect 2 is the heat-resistant glass according to Aspect 1, wherein, preferably, the decorated layer includes an inorganic layer provided on the one principal surface of the glass substrate, and the heat-resistant resin layer is provided on the inorganic layer.

A heat-resistant glass of Aspect 3 is the heat-resistant glass according to Aspect 2, wherein the inorganic layer may contain the surface-coated titanium oxide.

A heat-resistant glass of Aspect 4 is the heat-resistant glass according to any one of Aspects 1 to 3, wherein the heat-resistant resin layer may contain the surface-coated titanium oxide.

A heat-resistant glass of Aspect 5 is the heat-resistant glass according to any one of Aspects 1 to 4, wherein the coating layer is preferably made of an inorganic material.

A heat-resistant glass of Aspect 6 is the heat-resistant glass according to any one of Aspects 1 to 5, wherein the coating layer is preferably substantially free of organic component.

A heat-resistant glass of Aspect 7 is the heat-resistant glass according to any one of Aspects 1 to 6, wherein the coating layer preferably contains at least one of Al and Zr.

A heat-resistant glass of Aspect 8 is the heat-resistant glass according to any one of Aspects 1 to 7, wherein the coating layer is preferably made of aluminum oxide and zirconium oxide.

A heat-resistant glass of Aspect 9 is the heat-resistant glass according to any one of Aspects 1 to 8, wherein the titanium oxide is preferably rutile titanium oxide.

A heat-resistant glass of Aspect 10 is the heat-resistant glass according to any one of Aspects 3 to 9, wherein a content of the surface-coated titanium oxide in the inorganic layer is preferably not less than 1% by mass and not more than 80% by mass.

A heat-resistant glass of Aspect 11 is the heat-resistant glass according to any one of Aspects 1 to 10, wherein the heat-resistant resin layer may contain a silicone resin and a color pigment.

A heat-resistant glass of Aspect 12 is the heat-resistant glass according to any one of Aspects 1 to 11, wherein the heat-resistant glass preferably has an L* value of 50 or more, an a* value of 20 or less, and a b* value of 20 or less in an L*a*b* color system.

A heat-resistant glass of Aspect 13 is the heat-resistant glass according to any one of Aspects 1 to 12, wherein the decorated layer is preferably provided on a side of the heat-resistant glass close to a heating device of the heating cooker.

A top plate for a cooker of Aspect 14 in the present invention is a top plate made of the heat-resistant glass according to any one of Aspects 1 to 13, wherein the glass substrate has: a cooking surface on which a cooking utensil is to be put; and a back surface on an opposite side to the cooking surface, and the decorated layer is provided on the back surface of the glass substrate.

### [Advantageous Effects of Invention]

The present invention enables provision of a heat-resistant glass capable of suppressing discoloration of a decorated layer even when exposed to a high-temperature environment, such as when used in a heating cooker. Furthermore, the present invention enables provision of a top plate for a cooker in which the above-described heat-resistant glass is used.

### [Brief Description of Drawings]

[Fig. 1] Fig. 1 is a schematic cross-sectional view showing a top plate for a cooker according to a first embodiment of the present invention.
[Fig. 2] Fig. 2 is a schematic cross-sectional view showing a top plate for a cooker according to a second embodiment of the present invention.
[Fig. 3] Fig. 3 is a schematic cross-sectional view showing a top plate for a cooker according to a third embodiment of the present invention.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

### [Heat-Resistant Glass]

A heat-resistant glass according to the present invention is a heat-resistant glass for use in a heating cooker. The heat-resistant glass includes a glass substrate and a decorated layer provided on one of principal surfaces of the glass substrate. Furthermore, the decorated layer includes: a heat-resistant resin layer; and surface-coated titanium oxide including titanium oxide and a coating layer at least partially coating the surface of the titanium oxide.

Since the heat-resistant glass according to the present invention has the above structure, it can suppress the discoloration of the decorated layer even when exposed to a high-temperature environment, such as when used in a heating cooker.

Conventionally, a heat-resistant glass for use in a heating cooker may discolor its decorated layer when exposed to a high-temperature environment, such as when used in the heating cooker. This tendency is noticeable particularly in a heat-resistant glass with a pale color, such as gray.

In view of the above, the Inventor focused on titanium oxide serving as a pigment contained in the decorated layer and found that when surface-coated titanium oxide is contained in the decorated layer, the discoloration of the decorated layer can be suppressed even when the heat-resistant glass is exposed to a high-temperature environment.

Furthermore, the Inventor further conducted intensive studies and, as a result, found that when the decorated layer is formed of a plurality of layers, the use of the above-mentioned surface-coated titanium oxide in any one of the layers constituting the decorated layer enables suppression of the discoloration of the decorated layer.

As just described, the heat-resistant glass according to the present invention can suppress the discoloration of the decorated layer even when exposed to a high-temperature environment, such as when used in a heating cooker. Therefore, the heat-resistant glass according to the present invention can control the decorated layer including the heat-resistant resin layer to a desired color.

In the heat-resistant glass according to the present invention, the heat-resistant resin layer may be disposed over one of principal surfaces of the glass substrate with another layer, such as an inorganic layer, in between or may be disposed directly on the one principal surface of the glass substrate.

The surface-coated titanium oxide may be contained in the inorganic layer or contained in the heat-resistant resin layer.

In the heat-resistant glass according to the present invention, it is preferred that the decorated layer includes an inorganic layer provided on the one principal surface of the glass substrate, the heat-resistant resin layer is provided on the inorganic layer, and the inorganic layer contains the surface-coated titanium oxide. By doing so, the discoloration of the decorated layer can be further suppressed. In addition, by doing as described above, when the heat-resistant glass is used as a top plate for a cooker to place the decorated layer on the side of the top plate close to a heating device of the heating cooker, the inorganic layer comes to a most visible position as viewed from the cooking surface and, therefore, the above effect can be further exerted.

Although the cause for the discoloration of the decorated layer in the conventional heat-resistant glass is not clear, it can be considered that, for example, when titanium oxide is used as a white pigment, the inorganic layer may be discolored by the influence of titanium oxide or titanium oxide may act as a catalyst to accelerate thermal decomposition of resin in the heat-resistant resin layer and thus discolor the heat-resistant resin layer. Alternatively, it can be considered that when titanium oxide is contained in the inorganic layer, titanium oxide in the inorganic layer may act as a catalyst at the interface between the inorganic layer and the heat-resistant resin layer to accelerate thermal decomposition of the heat-resistant resin layer and thus discolor the heat-resistant resin layer.

Unlike the above, since, in the heat-resistant glass according to the present invention, surface-coated titanium oxide is used as a pigment contained in the decorated layer, the discoloration of the decorated layer can be suppressed even when the heat-resistant glass is exposed to a high-temperature environment.

It can be considered that when surface-coated titanium oxide is used as a pigment contained in the decorated layer, the coating layer depresses the function of titanium oxide as a catalyst, which makes it less likely that thermal decomposition based on radical reaction occurs and, as a result, makes it possible to suppress the discoloration of the inorganic layer, the heat-resistant resin layer, and eventually the decorated layer.

As just described, the heat-resistant glass according to the present invention can suppress the discoloration of the decorated layer even when exposed to a high-temperature environment, such as when used in a heating cooker. Therefore, the heat-resistant glass according to the present invention can control the decorated layer including the heat-resistant resin layer to a desired color. Particularly, in the conventional decorated layer likely to discolor, it is difficult to give a pale color to the decorated layer including the heat-resistant resin layer. On the other hand, in the heat-resistant glass according to the present invention, a pale color can be well given to the decorated layer including the heat-resistant resin layer.

In the present invention, titanium oxide constituting the surface-coated titanium oxide may be rutile titanium oxide, anatase titanium oxide or a mixture of rutile titanium oxide and anatase titanium oxide. Among them, rutile titanium oxide is preferred from the viewpoint of further suppressing the discoloration of the decorated layer. The reason for this is that anatase titanium oxide has higher activity than rutile titanium oxide and, therefore, can be considered to be more likely to accelerate the discoloration of the decorated layer.

The coating layer constituting the surface-coated titanium oxide is sufficient to at least partially coat the titanium oxide. The coating layer preferably coats 50% or more of the titanium oxide, more preferably coats 75% or more of the titanium oxide, even more preferably coats 85% or more of the titanium oxide, and particularly preferably coats 90% or more of the titanium oxide. Alternatively, the coating layer may entirely coat the titanium oxide.

The material for the coating layer is not particularly limited, but is preferably an inorganic material. When the material for the coating layer is an inorganic material, the discoloration of the decorated layer can be even more suppressed than when the material for the coating layer is an organic material.

Therefore, the coating layer is preferably substantially free of organic component. In the present invention, "substantially free of organic component" means that the content of organic component in the coating layer is 5% by mass or less. However, the coating layer may be substantially free of organic component or completely free of organic component.

The coating layer preferably contains Al, Zr, Si, Zn, Sn, Nb or like metal. These metals may be used singly or in combination of a plurality of types. Among them, from the viewpoint of further suppressing the discoloration of the decorated layer, at least one of Al and Zr is preferably contained in the coating layer and both of Al and Zr are more preferably contained in the coating layer. The reason for this is that the coating layer containing Al or Zr is, because of high Mohs hardnesses of Al and Zr, less likely to cause peeling-off due to friction between particles during pulverization of the coating material and therefore likely to keep the coverage higher.

In this case, the content of Al in the coating layer is preferably not less than 5% by mass, more preferably not less than 10% by mass, preferably not more than 50% by mass, and more preferably not more than 40% by mass.

The content of Zr in the coating layer is preferably not less than 5% by mass, more preferably not less than 10% by mass, preferably not more than 95% by mass, and more preferably not more than 90% by mass.

The coating layer is preferably made of an oxide of the above-mentioned metal. Among them, from the viewpoint of further suppressing the discoloration of the decorated layer, at least one of aluminum oxide and zirconium oxide preferably makes up the coating layer and both of aluminum oxide and zirconium oxide more preferably make up the coating layer.

The coating layer may be a film stack of a plurality of metallic films. For example, the coating layer may be a film stack of an aluminum oxide film and a zirconium oxide film. In this case, in the film stack, the zirconium oxide film may be layered on top of the aluminum oxide film or the aluminum oxide film may be layered on top of the zirconium oxide film.

The thickness ratio between the aluminum oxide film and the zirconium oxide film in the film stack ((aluminum oxide film) / (zirconium oxide film)) is preferably not less than 0.05, more preferably not less than 0.1, preferably not more than 10, and more preferably not more than 4. In this case, the discoloration of the decorated layer can be further suppressed.

The thickness of the coating layer is not particularly limited, but is preferably not less than 50 nm, more preferably not less than 300 nm, preferably not more than 2 µm, and more preferably not more than 1 µm. The thickness of the coating layer can be measured, for example, with a transmission electron microscope (TEM).

The coating layer is preferably clear. Note that, herein, "clear" means that the average light transmittance in a visible wavelength range of 450 nm to 700 nm is 70% or more.

The coating layer can be formed by surface treating the titanium oxide. For example, the coating layer can be formed by subjecting aggregates of titanium oxide generated by the sulfuric acid method or the chlorine method to wet processing with a bead mill or so on to pulverize and disperse them into a slurry, adding an aqueous solution of salt of alumina, zirconia, silica or so on into the obtained slurry, and then adding an alkali or an acid to the slurry to neutralize it and thus cause surface precipitation.

The average particle diameter of the surface-coated titanium oxide is preferably not less than 0.1 µm, more preferably not less than 0.2 µm, preferably not more than 1 µm, and more preferably not more than 0.4 µm. When the average particle diameter of the surface-coated titanium oxide is within the above range, the discoloration of the decorated layer can be further suppressed. The average particle diameter of the surface-coated titanium oxide refers to an average particle diameter D₅₀ thereof measured by a laser diffraction particle size distribution measurement device.

The surface-coated titanium oxide for use may be a marketed product. Examples of the marketed product that can be used as the surface-coated titanium oxide include item numbers "CR-97", "PFC105", and "PFC211" manufactured by Ishihara Sangyo Kaisha, Ltd.

The heat-resistant glass according to the present invention preferably has an L* value of 50 or more, an a* value of 20 or less, and a b* value of 20 or less in the L*a*b* color system. In this case, the heat-resistant glass can be given a pale color and, thus, the effect of suppressing the discoloration of the decorated layer can be more effectively exerted.

The L* value of the heat-resistant glass according to the present invention in the L*a*b* color system is preferably not less than 50, more preferably not less than 55, preferably not more than 90, and more preferably not more than 85.

The a* value of the heat-resistant glass according to the present invention in the L*a*b* color system is preferably not less than -15, more preferably not less than -10, preferably not more than 20, more preferably not more than 15, and even more preferably not more than 10.

The b* value of the heat-resistant glass according to the present invention in the L*a*b* color system is preferably not less than -15, more preferably not less than -10, preferably not more than 20, more preferably not more than 15, and even more preferably not more than 10.

The L* value, a* value, and b* value in the L*a*b* color system can be measured with a colorimeter from the principal surface of the glass substrate located on the side thereof opposite to the decorated layer. An example of the colorimeter that can be used is item number "CM-600d" manufactured by Konica Minolta, Inc.

In the heat-resistant glass according to the present invention, the decorated layer including the heat-resistant resin layer is preferably provided on the side of the heat-resistant glass close to a heating device of the heating cooker. In the present invention, even when the decorated layer including the heat-resistant resin layer is provided on the side of the heat-resistant glass close to a heating device of the heating cooker and thus exposed to a higher-temperature environment, the discoloration of the decorated layer can be suppressed.

The heat-resistant glass according to the present invention can be used as a top plate for a cooker and window glasses for a microwave, an oven, a stove, and so on. The heat-resistant glass according to the present invention can be suitably used particularly as a top plate for a cooker because a pale color can be well given to the decorated layer.

Hereinafter, a top plate for a cooker will be described as a specific example of the heat-resistant glass according to the present invention. However, the structures of the embodiments below can be applied likewise to heat-resistant glasses for other than cooker top plates.

### [Top Plate for Cooker]

### (First Embodiment)

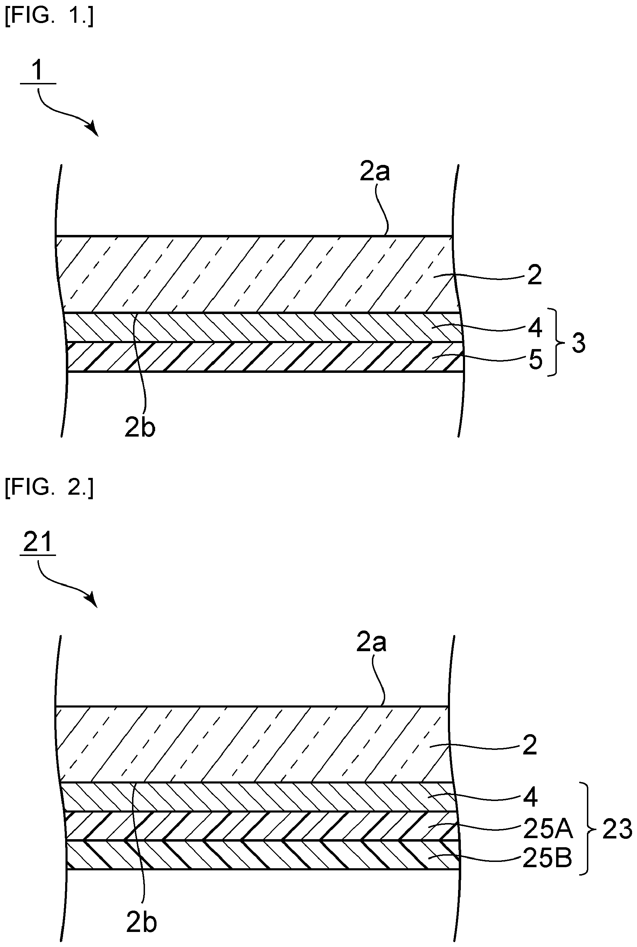

Fig. 1 is a schematic cross-sectional view showing a top plate for a cooker according to a first embodiment of the present invention.

A top plate 1 for a cooker shown in Fig. 1 includes a glass substrate 2 and a decorated layer 3. In this embodiment, the decorated layer 3 includes an inorganic layer 4 and a heat-resistant resin layer 5.

### <Glass Substrate>

The glass substrate 2 has a cooking surface 2a and an back surface 2b. The cooking surface 2a and the back surface 2b are surfaces opposed to each other. The cooking surface 2a is a surface located on the side of the substrate where a cooking utensil, such as a pot or a frying pan, is to be put. The back surface 2b is a surface located toward the interior of the cooker and facing a light source and a heating device. Therefore, the cooking surface 2a and the back surface 2b are top and back sides of the same substrate.

The glass substrate 2 is preferably a glass substrate that transmits light in at least a part of a wavelength range of 450 nm to 700 nm. The glass substrate 2 is preferably a clear glass substrate. The glass substrate 2 may be clear and colored, but is preferably clear and colorless from the viewpoint of further improving the aesthetic appearance of the top plate 1 for a cooker.

The top plate 1 for a cooker undergoes heating and cooling repeatedly. Therefore, the glass substrate 2 preferably has high heat resistance and a low coefficient of thermal expansion. Specifically, the softening temperature of the glass substrate 2 is preferably 700°C or higher and more preferably 750°C or higher. Furthermore, the average coefficient of linear thermal expansion of the glass substrate 2 at 30°C to 750°C is preferably in a range of -10 × 10⁻⁷/°C to +60 × 10⁻⁷/°C, more preferably in a range of -10 × 10⁻⁷/°C to +50 × 10⁻⁷/°C, and even more preferably in a range of -10 × 10⁻⁷/°C to +40 × 10⁻⁷/°C. Crystallized glass is preferably used as the glass substrate 2 and a specific example of low-expansion crystallized glass is a LAS-based crystallized glass "N-0" manufactured by Nippon Electric Glass Co., Ltd. A borosilicate glass substrate or the like may be used as the glass substrate 2.

The thickness of the glass substrate 2 is not particularly limited. The thickness of the glass substrate 2 can be appropriately selected according to the light transmittance and so on. The thickness of the glass substrate 2 may be, for example, about 2 mm to about 6 mm.

### <Inorganic Layer>

The inorganic layer 4 is provided on the back surface 2b of the glass substrate 2. The inorganic layer 4 may be provided entirely or partially on the back surface 2b of the glass substrate 2. The inorganic layer 4 is a layer provided for the purposes of giving a design and hiding the internal structure of the cooker. The inorganic layer 4 may be a porous film or a dense film.

In this embodiment, the inorganic layer 4 contains surface-coated titanium oxide and glass. As the surface-coated titanium oxide, the surface-coated titanium oxide described in the above section of Heat-Resistant Glass can be used.

The content of surface-coated titanium oxide contained in the inorganic layer 4 is not particularly limited, but is preferably not less than 1% by mass, more preferably not less than 5% by mass, even more preferably not less than 10% by mass, particularly preferably not less than 20% by mass, preferably not more than 80% by mass, and more preferably not more than 75% by mass. When the content of surface-coated titanium oxide contained in the inorganic layer 4 is within the above range, the discoloration of the inorganic layer 4 and the heat-resistant resin layer 5 and, eventually, the discoloration of the decorated layer 3 can be further suppressed and a pale color can be better given to the decorated layer 3.

Example of the glass include borosilicate-based glasses, silicate-based glasses containing at least one of an alkali metal component and an alkaline earth metal component, and phosphate-based glasses containing zinc and aluminum. The glass may be one obtained by firing a glass frit. The glass may be used as one type or as a combination of two or more types.

The content of glass contained in the inorganic layer 4 is not particularly limited, but is preferably not less than 20% by mass, more preferably not less than 25% by mass, preferably not more than 60% by mass, and more preferably not more than 55% by mass. When the content of glass contained in the inorganic layer 4 is within the above range, the adhesion between the inorganic layer 4 and the glass substrate 2 can be further increased.

The inorganic layer 4 may contain other components different from the surface-coated titanium oxide and the glass without impairing the effects of the invention. Examples of the other components include a color pigment and an extender pigment. The other components may be used singly or in combination of two or more of them. As for the color pigment and the extender pigment, an appropriate combination of a plurality of types of pigments can be used in consideration of the design of the cooker and the hideability of the interior of the cooker.

Examples of the color pigment include: white pigment powders, such as non-surface-treated TiO₂ powder, ZrO₂ powder, and ZrSiO₄ powder; blue inorganic pigment powders containing Co; green inorganic pigment powders containing Co; Ti-Sb-Cr-based or Ti-Ni-based yellow inorganic pigment powders, Co-Si-based red inorganic pigment powders; brown inorganic pigment powders containing Fe; and black inorganic pigment powders containing Cu. Note that, based on the spirit of the invention, the content of non-surface-treated TiO₂ powder in the inorganic layer 4 is preferably not more than 15% by mass and more preferably not more than 10% by mass and, even more preferably, the inorganic layer 4 is substantially free of non-surface-treated TiO₂.

Examples of the blue inorganic pigment powders containing Co include Co-Al-based and Co-Al-Ti-based inorganic pigment powders. An example of the Co-Al-based inorganic pigment powders is CoAl₂O₄ powder. An example of the Co-Al-Ti-based inorganic pigment powders is CoAl₂O₄-TiO₂-Li₂O powder.

Examples of the green inorganic pigment powders containing Co include Co-Al-Cr-based and Co-Ni-Ti-Zn-based inorganic pigment powders. An example of the Co-Al-Cr-based inorganic pigment powders is Co (Al, Cr)₂O₄ powder. An example of the Co-Ni-Ti-Zn-based inorganic pigment powders is (Co, Ni, Zn)₂TiO₄ powder.

Examples of the brown inorganic pigment powders containing Fe include Fe-Zn-based inorganic pigment powders . An example of the Fe-Zn-based inorganic pigment powders is (Zn, Fe) Fe₂O₄ powder.

Examples of the black inorganic pigment powders containing Cu include Cu-Cr-based inorganic pigment powders and Cu-Fe-based inorganic pigment powders. Examples of the Cu-Cr-based inorganic pigment powders include Cu(Cr, Mn)₂O₄ powder and Cu-Cr-Mn powder. An example of the Cu-Fe-based inorganic pigment powders is Cu-Fe-Mn powder.

The extender pigment is an inorganic pigment powder different from the color pigment. The type of the extender pigment is not particularly limited, but, for example, flaky or spherical inorganic pigment powders can be used. With the use of the extender pigment, the design of the top plate 1 for a cooker, the ability of the top plate 1 for a cooker to hide the cooker interior, and the mechanical strength of the top plate 1 for a cooker can be further improved. Examples of the extender pigment include talc and mica. The extender pigment may be used as one type or as a combination of two or more types.

The content of the other components contained in the inorganic layer 4 is not particularly limited, but may be, for example, 10% by mass or less. However, the inorganic layer 4 may not contain the other components.

The thickness of the inorganic layer 4 is not particularly limited, but is preferably not less than 1 µm, more preferably not less than 2 µm, preferably not more than 5 µm, and more preferably not more than 4 µm. When the thickness of the inorganic layer 4 is within the above range, the discoloration of the inorganic layer 4 and the heat-resistant resin layer 5 and, eventually, the discoloration of the decorated layer 3 can be further suppressed and a pale color can be well given to the decorated layer 3. The thickness of the inorganic layer 4 can be appropriately selected in consideration of the light transmittance, the mechanical strength, the coefficient of thermal expansion or other factors.

The manner of forming the inorganic layer 4 is not particularly limited. The inorganic layer 4 can be formed, for example, in the following manner.

First, a material for the inorganic layer 4 containing surface-coated titanium oxide, a glass frit, and a resin binder is prepared. The material for the inorganic layer 4 may contain, as necessary, other components, such as the above-described color pigment. The material for the inorganic layer 4 may be in paste form. Next, the material for the inorganic layer 4 is applied to the back surface 2b of the glass substrate 2 and then dried. Thus, the inorganic layer 4 can be formed. Depending on the composition of the inorganic layer 4, the inorganic layer 4 after the drying may be subjected to firing.

For example, screen printing can be used as the method for applying the material for the inorganic layer 4. The drying temperature of the material for the inorganic layer 4 may be, for example, a temperature of not lower than 50°C and not higher than 100°C. The drying time of the material for the inorganic layer 4 may be, for example, not less than 10 seconds and not more than 10 minutes.

The firing temperature and the firing time of the material for the inorganic layer 4 can be appropriately selected according to the composition of the glass frit for use or other factors. The firing temperature of the material for the inorganic layer 4 may be, for example, a temperature of not lower than 200°C and not higher than 900°C. The firing time of the material for the inorganic layer 4 may be, for example, not less than 10 minutes and not more than an hour.

### <Heat-Resistant Resin Layer>

The heat-resistant resin layer 5 is provided on the inorganic layer 4. The heat-resistant resin layer 5 may be provided entirely or partially on the surface of the inorganic layer 4. The type of the heat-resistant resin layer 5 is not particularly limited, but, for example, a heat-resistant resin layer containing a silicone resin and a color pigment can be used.

The type of the silicone resin is not particularly limited, but a silicone resin having high heat resistance is preferred. The silicone resin is preferably, for example, a silicone resin in which a functional group attached directly to a silicon atom is at least one of a methyl group and a phenyl group. In this case, the discoloration of the inorganic layer 4 and the heat-resistant resin layer 5 when the top plate 1 for a cooker has reached high temperatures and, eventually, the discoloration of the decorated layer 3 at the time can be more effectively suppressed.

The content of silicone resin contained in the heat-resistant resin layer 5 is not particularly limited, but is preferably not less than 20% by mass, more preferably not less than 30% by mass, preferably not more than 70% by mass, and more preferably not more than 60% by mass. When the content of silicone resin is the above lower limit or more, the heat resistance and impact resistance of the top plate 1 for a cooker can be further increased. When the content of silicone resin is the above upper limit or less, the mechanical strength of the top plate 1 for a cooker can be further increased.

As the color pigment, the color pigment described in the above section of Inorganic Layer 4 can be appropriately used. The content of color pigment contained in the heat-resistant resin layer 5 is preferably not less than 1% by mass, more preferably not less than 3% by mass, preferably not more than 60% by mass, and more preferably not more than 45% by mass. When the content of color pigment contained in the heat-resistant resin layer 5 is the above lower limit or more, the design and the ability to hide the cooker interior can be further improved. When the content of color pigment contained in the heat-resistant resin layer 5 is the above upper limit or less, the heat resistance and impact resistance of the top plate 1 for a cooker can be further increased.

The heat-resistant resin layer 5 may further contain an extender pigment. As the extender pigment, the extender pigment described in the above section of Inorganic Layer 4 can be appropriately used. The content of extender pigment contained in the heat-resistant resin layer 5 is not particularly limited, but is preferably not less than 1% by mass, more preferably not less than 10% by mass, preferably not more than 40% by mass, and more preferably not more than 35% by mass. When the content of extender pigment is within the above range, the design and scratch resistance of the top plate 1 for a cooker and the ability of the top plate 1 for a cooker to hide the cooker interior can be more effectively improved.

The thickness of the heat-resistant resin layer 5 is not particularly limited. The thickness of the heat-resistant resin layer 5 is preferably not less than 5 µm, more preferably not less than 8 µm, preferably not more than 50 µm, and more preferably not more than 30 µm. When the thickness of the heat-resistant resin layer 5 is within the above range, the design of the top plate 1 for a cooker and the ability of the top plate 1 for a cooker to hide the cooker interior can be further improved.

The manner of forming the heat-resistant resin layer 5 is not particularly limited. The heat-resistant resin layer 5 can be formed, for example, in the following manner.

First, a heat-resistant coating material (paste) containing a silicone resin precursor and a color pigment is prepared. The heat-resistant coating material may contain a curing catalyst or a cross-linking agent. Furthermore, the heat-resistant coating material may contain an extender pigment, a solvent, a viscosity regulator, a leveling agent, a defoamer or so on.

The preferred silicone resin precursors are silicone compounds having a silanol group. Among these silicone compounds, from the viewpoint of further increasing the heat resistance of the resultant heat-resistant resin layer 5, a silicone compound in which a methyl group or a phenyl group is directly attached to a silicon atom is preferred as the silicone resin precursor. In this case, a methyl group may be attached directly to a silicon atom, a phenyl group may be attached directly to a silicon atom, or a methyl group and a phenyl group may be attached directly to the same silicon atom.

Next, the prepared heat-resistant coating material is applied to the inorganic layer 4. Subsequently, the glass substrate 2 to which the heat-resistant coating material is applied is heated to dry the heat-resistant coating material and cure the silicone resin precursor. Thus, a heat-resistant resin layer 5 can be formed. Depending on the composition of the heat-resistant resin layer 5, the heat-resistant resin layer 5 after the drying may be subjected to firing.

The drying temperature for the heat-resistant coating material may be, for example, not lower than 60°C and not higher than 200°C. The drying time for the heat-resistant coating material may be, for example, not less than one minute and not more than thirty minutes.

The firing temperature for the heat-resistant coating material may be, for example, a temperature of not lower than 200°C and not higher than 450°C. The firing time for the heat-resistant coating material may be, for example, not less than ten minutes and not more than an hour.

### (Second Embodiment)

Fig. 2 is a schematic cross-sectional view showing a top plate for a cooker according to a second embodiment of the present invention.

A top plate 21 for a cooker shown in Fig. 2 includes a glass substrate 2 and a decorated layer 23. The top plate 21 for a cooker shown in Fig. 2 is different in the structure of the heat-resistant resin layer from the top plate 1 for a cooker shown in Fig. 1. The same respective materials as those for the glass substrate 2 and the inorganic layer 4 in the first embodiment can be used for the glass substrate 2 and the inorganic layer 4 in this embodiment.

In this embodiment, two heat-resistant resin layers are provided on the inorganic layer 4. More specifically, a first heat-resistant resin layer 25A is provided on the inorganic layer 4. Furthermore, a second heat-resistant resin layer 25B is provided on the first heat-resistant resin layer 25A. As each of the first heat-resistant resin layer 25A and the second heat-resistant resin layer 25B, a heat-resistant resin layer containing a silicone resin and a color pigment can be used. In this embodiment, the first heat-resistant resin layer 25A is different in composition from the second heat-resistant resin layer 25B. However, the compositions of the first heat-resistant resin layer 25A and the second heat-resistant resin layer 25B may be the same and may not necessarily be limited to differ from each other.

Furthermore, it is possible that the first heat-resistant resin layer 25A contains a first color pigment and the second heat-resistant resin layer 25B contains a second color pigment different from the first color pigment. In this case, an appropriate combination of color pigments can be selected in consideration of design and the ability to hide the cooker interior.

For each of the first heat-resistant resin layer 25A and the second heat-resistant resin layer 25B, the composition, content, thickness, and other features described in the section of Heat-Resistant Resin Layer 5 can be appropriately used.

The total thickness of the first heat-resistant resin layer 25A and the second heat-resistant resin layer 25B is also not particularly limited. The total thickness of the first heat-resistant resin layer 25A and the second heat-resistant resin layer 25B is preferably not less than 5 µm, more preferably not less than 8 µm, preferably not more than 50 µm, and more preferably not more than 30 µm. When the total thickness of the first heat-resistant resin layer 25A and the second heat-resistant resin layer 25B is within the above range, the design of the top plate 21 for a cooker and the ability of the top plate 21 for a cooker to hide the cooker interior can be further improved.

The manner of forming the first heat-resistant resin layer 25A and the second heat-resistant resin layer 25B is also not particularly limited and they can be formed in the same manner as the heat-resistant resin layer 5 in the first embodiment is formed.

As in this embodiment, the heat-resistant resin layer may be constituted by two heat-resistant resin layers. However, in consideration of the design of the top plate for a cooker, the ability thereof to hide the cooker interior or other factors, the heat-resistant resin layer may be constituted by a single heat-resistant resin layer as in the first embodiment or constituted by three or more heat-resistant resin layers.

### (Third Embodiment)

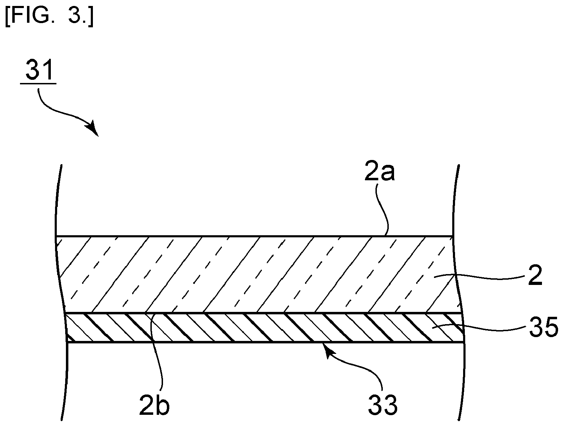

Fig. 3 is a schematic cross-sectional view showing a top plate for a cooker according to a third embodiment of the present invention.

A top plate 31 for a cooker shown in Fig. 3 includes a glass substrate 2 and a decorated layer 33. The decorated layer 33 is formed of a single heat-resistant resin layer 35. The same material as that for the glass substrate 2 in the first embodiment can be used for the glass substrate 2 in this embodiment.

The heat-resistant resin layer 35 is provided on the back surface 2b of the glass substrate 2. The heat-resistant resin layer 35 may be provided entirely or partially on the back surface 2b of the glass substrate 2. The heat-resistant resin layer 35 is a layer provided for the purposes of giving heat resistance and a design and hiding the internal structure of the cooker.

In this embodiment, the heat-resistant resin layer 35 contains surface-coated titanium oxide and a silicone resin. As the surface-coated titanium oxide, the surface-coated titanium oxide described in the above section of Heat-Resistant Glass can be used. As the silicone resin, the same silicone resin as in the first embodiment can be used.

The content of surface-coated titanium oxide contained in the heat-resistant resin layer 35 is not particularly limited, but is preferably not less than 1% by mass, more preferably not less than 3% by mass, even more preferably not less than 5% by mass, particularly preferably not less than 10% by mass, preferably not more than 80% by mass, more preferably not more than 50% by mass, and even more preferably not more than 40% by mass. When the content of surface-coated titanium oxide contained in the heat-resistant resin layer 35 is within the above range, the discoloration of the heat-resistant resin layer 35 can be further suppressed and a pale color can be well given to the decorated layer 33.

The content of silicone resin contained in the heat-resistant resin layer 35 is not particularly limited, but is preferably not less than 20% by mass, more preferably not less than 30% by mass, preferably not more than 70% by mass, and more preferably not more than 60% by mass. When the content of silicone resin is the above lower limit or more, the heat resistance and impact resistance of the top plate 31 for a cooker can be further increased. When the content of silicone resin is the above upper limit or less, the mechanical strength of the top plate 31 for a cooker can be further increased.

The heat-resistant resin layer 35 may contain any other color pigment or an extender pigment. As the other color pigment, the color pigment described in the first embodiment can be appropriately used. The content of the other color pigment contained in the heat-resistant resin layer 35 is preferably not less than 1% by mass, more preferably not less than 3% by mass, preferably not more than 60% by mass, and more preferably not more than 45% by mass . When the content of the other color pigment contained in the heat-resistant resin layer 35 is the above lower limit or more, the design and the ability to hide the cooker interior can be further improved. When the content of the other color pigment contained in the heat-resistant resin layer 35 is the above upper limit or less, the heat resistance and impact resistance of the top plate 31 for a cooker can be further increased.

As the extender pigment, the extender pigment described in the above section of Inorganic Layer 4 can be appropriately used. The content of extender pigment contained in the heat-resistant resin layer 35 is not particularly limited, but is preferably not less than 1% by mass, more preferably not less than 10% by mass, preferably not more than 40% by mass, and more preferably not more than 35% by mass. When the content of extender pigment is within the above range, the design and scratch resistance of the top plate 31 for a cooker and the ability of the top plate 31 for a cooker to hide the cooker interior can be more effectively improved.

The thickness of the heat-resistant resin layer 35 is not particularly limited, but is preferably not less than 5 µm, more preferably not less than 8 µm, preferably not more than 50 µm, and more preferably not more than 30 µm. When the thickness of the heat-resistant resin layer 35 is within the above range, the discoloration of the heat-resistant resin layer 35 can be further suppressed and a pale color can be well given to the decorated layer 33.

The manner of forming the heat-resistant resin layer 35 is also not particularly limited and the heat-resistant resin layer 35 can be formed in the same manner as the heat-resistant resin layer 5 in the first embodiment is formed.

Alternatively, in consideration of the design of the top plate for a cooker, the ability thereof to hide the cooker interior or other factors, the heat-resistant resin layer 35 may be constituted by a plurality of heat-resistant resin layers.

### (Other Embodiments)

In the first and second embodiments, a description has been given of the case where surface-coated titanium oxide is contained in the inorganic layer 4. On the other hand, in the third embodiment, a description has been given of the case where surface-coated titanium oxide is contained in the heat-resistant resin layer 35. However, in the present invention, both the inorganic layer and the heat-resistant resin layer may contain surface-coated titanium oxide. Alternatively, when the heat-resistant resin layer is constituted by a plurality of heat-resistant resin layers, at least one of the plurality of heat-resistant resin layers may contain surface-coated titanium oxide.

Hereinafter, a description will be given in further detail of the present invention with reference to examples. However, the following examples are merely illustrative. The present invention is not at all limited by the following examples .

### (Example 1)

### Formation of Inorganic Layer

First, a mixed powder of 25% by mass glass powder, 43.4% by mass surface-coated titanium oxide, 30% by mass Ca-Sn-Si-Cr-based color pigment, and 1.6% by mass Co-Al-Zn-based color pigment was mixed with a resin binder equal in mass to the mixed powder to prepare a paste.

As the surface-coated titanium oxide, surface-coated titanium oxide in which the surface of rutile titanium oxide was coated with a film stack of aluminum oxide and zirconium oxide (item number "CR-97" manufactured by Ishihara Sangyo Kaisha, Ltd.) was used. The average particle diameter of the surface-coated titanium oxide was 0.25 µm.

Next, the paste was screen-printed to a thickness of 2.5 µm on an entire surface of a clear crystallized glass plate (trade name "N-0" manufactured by Nippon Electric Glass Co., Ltd., average coefficient of linear thermal expansion at 30°C to 750°C: 0.5 × 10⁻⁷/°C, thickness: 4 mm) as a glass substrate. Thereafter, the paste was dried by the application of heat at 800°C for 30 minutes, thus forming an inorganic layer on one of principal surfaces of the glass substrate.

### Formation of First Heat-Resistant Resin Layer

A 31% by mass silicone resin (a resin solid content) as a heat-resistant resin, a 18% by mass white inorganic pigment, a 18% by mass extender pigment (talc), and a 33% by mass resin binder were mixed to prepare a heat-resistant coating material (a paste). Next, the prepared heat-resistant coating material was screen-printed to a thickness of 8 µm on the inorganic layer. Thereafter, the heat-resistant coating material was dried at 800°C for one minute, thus forming a white first heat-resistant resin layer.

### Formation of Second Heat-Resistant Resin Layer

A 31% by mass silicone resin (a resin solid content) as a heat-resistant resin, a 18% by mass black inorganic pigment, a 18% by mass extender pigment (talc), and a 33% by mass resin binder were mixed to prepare a heat-resistant coating material (a paste). Next, the prepared heat-resistant coating material was screen-printed to a thickness of 8 µm on the first heat-resistant resin layer. Thereafter, the heat-resistant coating material was fired at 300°C for ten minutes, thus forming a gray second heat-resistant resin layer.

In the above manner, a pink heat-resistant glass with a decorated layer provided on the one principal surface of the glass substrate was obtained.

### (Example 2)

In Example 2, a pink heat-resistant glass was obtained in the same manner as in Example 1 except that the following surface-coated titanium oxide was used instead of the surface-coated titanium oxide in Example 1.

As surface-coated titanium oxide in Example 2, surface-coated titanium oxide in which the surface of rutile titanium oxide was coated with a film stack of silicon oxide, aluminum oxide, and zirconium oxide (item number "PFC105" manufactured by Ishihara Sangyo Kaisha, Ltd.) was used. The surface-coated titanium oxide in Example 2 contained a polyol which was an organic component (organic substance) . The average particle diameter of the surface-coated titanium oxide was 0.28 µm.

### (Example 3)

In Example 3, a pink heat-resistant glass was obtained in the same manner as in Example 1 except that the following surface-coated titanium oxide was used instead of the surface-coated titanium oxide in Example 1.

As surface-coated titanium oxide in Example 3, surface-coated titanium oxide in which the surface of rutile titanium oxide was coated with a film stack of silicon oxide and aluminum oxide (item number "PFC211" manufactured by Ishihara Sangyo Kaisha, Ltd.) was used. The average particle diameter of the surface-coated titanium oxide was 0.25 µm.

### (Comparative Example 1)

In Comparative Example 1, a pink heat-resistant glass was obtained in the same manner as in Example 1 except that the following non-surface-coated titanium oxide was used instead of the surface-coated titanium oxide in Example 1.

As titanium oxide in Comparative Example 1, anatase titanium oxide (item number "A-100" manufactured by Ishihara Sangyo Kaisha, Ltd.) was used. The average particle diameter of the titanium oxide was 0.15 µm.

### (Evaluations)

The obtained heat-resistant glasses underwent a heat resistance test in which they were heated at 350°C for 100 hours, and were measured in terms of the L* value, the a* value, and the b* value in the L*a*b* color system before and after the heat resistance test. Furthermore, the color difference ΔE between before and after the heat resistance test of each of the heat-resistant glasses was determined. The L* value, the a* value, and the b* value in the L*a*b* color system were evaluated with a colorimeter ("CM-600d" manufactured by Konica Minolta, Inc.) from the glass side of the glass substrate in conformity with JIS Z 8722:2009. The results are shown in Table 1 below.

**[Table 1]**

| | | Example 1 | Example 2 | Example 3 | Comparative Example 1 |
|---|---|---|---|---|---|
| Before Heat Resistance Test | L* | 61.4 | 61.37 | 61.62 | 61.4 |
| | a* | 2.61 | 2.87 | 2.11 | 2.80 |
| | b* | 4.98 | 4.18 | 3.14 | 3.57 |
| After Heat Resistance Test | L* | 63.41 | 63.76 | 64.48 | 64.34 |
| | a* | 1.94 | 2.23 | 1.54 | 1.27 |
| | b* | 5.51 | 4.63 | 3.56 | 4.44 |
| Amount of Change | 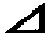 L | 2.01 | 2.39 | 2.86 | 2.94 |
| | 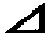 a* | -0.67 | -0.64 | -0.57 | -1.53 |
| | 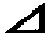 b* | 0.53 | 0.45 | 0.42 | 0.87 |
| | 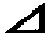 E | 2.18 | 2.51 | 2.95 | 3.43 |

As is obvious from Table 1, it can be seen that, in Examples 1 to 3 in which surface-coated titanium oxide was used, the color difference ΔE between before and after the heat resistance test was small as compared to Comparative Example 1 in which non-surface-coated titanium oxide was used and, therefore, the discoloration of the decorated layer could be suppressed.

### (Example 4)

### Formation of Inorganic Layer

First, a mixed powder of 25% by mass glass powder, 64% by mass surface-coated titanium oxide, and 11% by mass Ca-Sn-Si-Cr-based color pigment was mixed with a resin binder equal in mass to the mixed powder to prepare a paste. The surface-coated titanium oxide used was the same as in Example 1.

Next, the paste was screen-printed to a thickness of 2.5 µm on an entire surface of a clear crystallized glass plate (trade name "N-0" manufactured by Nippon Electric Glass Co., Ltd., average coefficient of linear thermal expansion at 30°C to 750°C: 0.5 × 10⁻⁷/°C, thickness: 4 mm) as a glass substrate. Thereafter, the paste was dried by the application of heat at 80°C for one minute, thus forming an inorganic layer on one of principal surfaces of the glass substrate.

### Formation of Heat-Resistant Resin Layer

A 31% by mass silicone resin (a resin solid content) as a heat-resistant resin, a 18% by mass black inorganic pigment, a 18% by mass extender pigment (talc), and a 33% by mass resin binder were mixed to prepare a heat-resistant coating material (a paste). Next, the prepared heat-resistant coating material was screen-printed to a thickness of 8 µm on the heat-resistant resin layer. Thereafter, the heat-resistant coating material was fired at 300°C for ten minutes, thus forming a gray heat-resistant resin layer. In this manner, a beige heat-resistant glass with a decorated layer provided on the one principal surface of the glass substrate was obtained.

### (Comparative Example 2)

In Comparative Example 2, a beige heat-resistant glass was obtained in the same manner as in Example 4 except that the same titanium oxide as in Comparative Example 1 was used instead of the surface-coated titanium oxide in Example 4.

### (Evaluations)

The obtained heat-resistant glasses underwent a heat resistance test in which they were heated at 350°C for 100 hours, and were measured in terms of the L* value, the a* value, and the b* value in the L*a*b* color system before and after the heat resistance test. Furthermore, the color difference ΔE between before and after the heat resistance test of each of the heat-resistant glasses was determined. The L* value, the a* value, and the b* value in the L*a*b* color system were evaluated with a colorimeter ("CM-600d" manufactured by Konica Minolta, Inc.) from the glass side of the glass substrate in conformity with JIS Z 8722:2009. The results are shown in Table 2 below.

**[Table 2]**

| | | Example 4 | Comparative Example 2 |
|---|---|---|---|
| Before Heat Resistance Test | L* | 63.31 | 63.05 |
| | a* | 0.08 | 0.18 |
| | b* | 4.48 | 3.97 |
| After Heat Resistance Test | L* | 64.49 | 65.10 |
| | a* | 0.00 | -0.18 |
| | b* | 5.03 | 4.97 |
| Amount of Change | 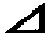 L | 1.18 | 2.05 |
| | 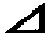 a* | -0.08 | -0.36 |
| | 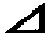 b* | 0.55 | 1.00 |
| | 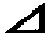 E | 1.30 | 2.31 |

As is obvious from Table 2, it can be seen that, in Example 4 in which surface-coated titanium oxide was used, the color difference ΔE between before and after the heat resistance test was small as compared to Comparative Example 2 in which non-surface-coated titanium oxide was used and, therefore, the discoloration of the decorated layer could be suppressed.

### (Example 5)

### Formation of Inorganic Layer

First, a mixed powder of 25% by mass glass powder, 68% by mass surface-coated titanium oxide, 1.8% by mass Fe-Zn-Cr-based color pigment, and 5.2% by mass Co-Al-Zn-based color pigment was mixed with a resin binder equal in mass to the mixed powder to prepare a paste. The surface-coated titanium oxide used was the same as in Example 1.

Next, the paste was screen-printed to a thickness of 2.5 µm on an entire surface of a clear crystallized glass plate (trade name "N-0" manufactured by Nippon Electric Glass Co., Ltd., average coefficient of linear thermal expansion at 30°C to 750°C: 0.5 × 10⁻⁷/°C, thickness: 4 mm) as a glass substrate. Thereafter, the paste was dried by the application of heat at 80°C for one minute, thus forming an inorganic layer on one of principal surfaces of the glass substrate.

### Formation of Heat-Resistant Resin Layer

A 31% by mass silicone resin (a resin solid content) as a heat-resistant resin, a 18% by mass black inorganic pigment, a 18% by mass extender pigment (talc), and a 33% by mass resin binder were mixed to prepare a heat-resistant coating material (a paste). Next, the prepared heat-resistant coating material was screen-printed to a thickness of 8 µm on the heat-resistant resin layer. Thereafter, the heat-resistant coating material was fired at 300°C for ten minutes, thus forming a gray heat-resistant resin layer. In this manner, a gray heat-resistant glass with a decorated layer provided on the one principal surface of the glass substrate was obtained.

### (Comparative Example 3)

In Comparative Example 3, a gray heat-resistant glass was obtained in the same manner as in Example 5 except that the same titanium oxide as in Comparative Example 1 was used instead of the surface-coated titanium oxide in Example 5.

### (Evaluations)

The obtained heat-resistant glasses underwent a heat resistance test in which they were heated at 350°C for 100 hours, and were measured in terms of the L* value, the a* value, and the b* value in the L*a*b* color system before and after the heat resistance test. Furthermore, the color difference ΔE between before and after the heat resistance test of each of the heat-resistant glasses was determined. The L* value, the a* value, and the b* value in the L*a*b* color system were evaluated with a colorimeter ("CM-600d" manufactured by Konica Minolta, Inc.) from the glass side of the glass substrate in conformity with JIS Z 8722:2009. The results are shown in Table 3 below.

**[Table 3]**

| | | Example 5 | Comparative Example 3 |
|---|---|---|---|
| Before Heat Resistance Test | L* | 58.17 | 57.42 |
| | a* | -0.45 | -0.28 |
| | b* | 3.04 | 1.70 |
| After Heat Resistance Test | L* | 59.57 | 59.07 |
| | a* | -0.42 | -0.17 |
| | b* | 3.51 | 2.36 |
| Amount of Change | 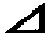 L | 1.40 | 1.65 |
| | 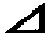 a* | 0.03 | 0.11 |
| | 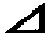 b* | 0.47 | 0.66 |
| | 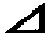 E | 1.48 | 1.78 |

As is obvious from Table 3, it can be seen that, in Example 5 in which surface-coated titanium oxide was used, the color difference ΔE between before and after the heat resistance test was small as compared to Comparative Example 3 in which non-surface-coated titanium oxide was used and, therefore, the discoloration of the decorated layer could be suppressed.

### (Example 6)

### Formation of Inorganic Layer

First, a mixed powder of 25% by mass glass powder, 64% by mass surface-coated titanium oxide, and 11% by mass Ca-Sn-Si-Cr-based color pigment was mixed with a resin binder equal in mass to the mixed powder to prepare a paste.

As the surface-coated titanium oxide, surface-coated titanium oxide in which the surface of rutile titanium oxide was coated with a film stack of aluminum oxide and zirconium oxide (item number "CR-97" manufactured by Ishihara Sangyo Kaisha, Ltd.) was used. The average particle diameter of the surface-coated titanium oxide was 0.25 µm.

Next, the paste was screen-printed to a thickness of 2.5 µm on an entire surface of a clear crystallized glass plate (trade name "N-0" manufactured by Nippon Electric Glass Co., Ltd., average coefficient of linear thermal expansion at 30°C to 750°C: 0.5 × 10⁻⁷/°C, thickness: 4 mm) as a glass substrate. Thereafter, the paste was dried by the application of heat at 800°C for 30 minutes, thus forming an inorganic layer on one of principal surfaces of the glass substrate.

### Formation of Heat-Resistant Resin Layer

A 45% by mass silicone resin (a resin solid content) as a heat-resistant resin, 25% by mass non-surface-coated titanium oxide, a 2.5% by mass black inorganic pigment, and a 27.5% by mass extender pigment (talc) were mixed to prepare a heat-resistant coating material (a paste). Next, the prepared heat-resistant coating material was screen-printed to a thickness of 8 µm on the inorganic layer. Thereafter, the heat-resistant coating material was dried at 300°C for ten minutes, thus forming a gray heat-resistant resin layer.

As the non-surface-coated titanium oxide, anatase titanium oxide (item number "A-100" manufactured by Ishihara Sangyo Kaisha, Ltd.) was used. The average particle diameter of the titanium oxide was 0.15 µm.

In the above manner, a beige heat-resistant glass with a decorated layer provided on the one principal surface of the glass substrate was obtained.

### (Example 7 and Comparative Example 4)

In Example 7 and Comparative Example 4, an inorganic layer and a heat-resistant resin layer were produced by changing respective titanium oxides contained in the inorganic layer and the heat-resistant resin layer in Example 6 to those described in Table 4. A beige heat-resistant glass was obtained otherwise in the same manner as in Example 6. In the table, Titanium Oxide 1 refers to surface-coated titanium oxide in which the surface of rutile titanium oxide is coated with a film stack of aluminum oxide and zirconium oxide (item number "CR-97" manufactured by Ishihara Sangyo Kaisha, Ltd.), and Titanium Oxide 2 refers to anatase titanium oxide (item number "A-100" manufactured by Ishihara Sangyo Kaisha, Ltd.).

### (Evaluations)

The obtained heat-resistant glasses underwent a heat resistance test in which they were heated at 350°C for 100 hours, and were measured in terms of the L* value, the a* value, and the b* value in the L*a*b* color system before and after the heat resistance test. Furthermore, the color difference ΔE between before and after the heat resistance test of each of the heat-resistant glasses was determined. The L* value, the a* value, and the b* value in the L*a*b* color system were evaluated with a colorimeter ("CM-600d" manufactured by Konica Minolta, Inc.) from the glass side of the glass substrate in conformity with JIS Z 8722:2009. The results are shown in Table 4 below.

**[Table 4]**

| | | Example 6 | Example 7 | Comparative Example 4 |
|---|---|---|---|---|
| Inorganic Layer | | Titanium Oxide 1 | Titanium Oxide 1 | Titanium Oxide 2 |
| Heat-Resistant Resin Layer | | Titanium Oxide 2 | Titanium Oxide 1 | Titanium Oxide 2 |
| Before Heat Resistance Test | L* | 59.71 | 59.59 | 58.61 |
| | a* | -1.02 | -1.02 | -0.94 |
| | b* | 2.69 | 2.76 | 1.77 |
| After Heat Resistance Test | L* | 62.12 | 62.83 | 62.5 |
| | a* | -1.00 | -0.92 | -0.85 |
| | b* | 3.68 | 3.85 | 3.67 |
| Amount of Change | Δ L* | 2.41 | 3.24 | 3.89 |
| | Δ a* | 0.02 | 0.1 | 0.09 |
| | Δ b* | 0.99 | 1.09 | 1.9 |
| | 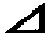 E | 2.61 | 3.42 | 4.33 |

As is obvious from Table 4, it can be seen that when surface-coated titanium oxide is contained in the decorated layer, the discoloration of the decorated layer can be suppressed.

### (Example 8)

### Formation of Inorganic Layer

First, a mixed powder of 25% by mass glass powder, 64% by mass surface-coated titanium oxide, and 11% by mass Ca-Sn-Si-Cr-based color pigment was mixed with a resin binder equal in mass to the mixed powder to prepare a paste.

As the surface-coated titanium oxide, surface-coated titanium oxide in which the surface of rutile titanium oxide was coated with a film stack of aluminum oxide and zirconium oxide (item number "CR-97" manufactured by Ishihara Sangyo Kaisha, Ltd.) was used. The average particle diameter of the surface-coated titanium oxide was 0.25 µm.

Next, the paste was screen-printed to a thickness of 2.5 µm on an entire surface of a clear crystallized glass plate (trade name "N-0" manufactured by Nippon Electric Glass Co., Ltd., average coefficient of linear thermal expansion at 30°C to 750°C: 0.5 × 10^{~7}/°C, thickness: 4 mm) as a glass substrate. Thereafter, the paste was dried by the application of heat at 800°C for 30 minutes, thus forming an inorganic layer on one of principal surfaces of the glass substrate.

### Formation of First Heat-Resistant Resin Layer

A 45% by mass silicone resin (a resin solid content) as a heat-resistant resin, 27.5% by mass non-surface-coated titanium oxide, and a 27.5% by mass extender pigment (talc) were mixed to prepare a heat-resistant coating material (a paste). Next, the prepared heat-resistant coating material was screen-printed to a thickness of 8 µm on the inorganic layer. Thereafter, the heat-resistant coating material was dried at 300°C for ten minutes, thus forming a white first heat-resistant resin layer.

### Formation of Second Heat-Resistant Resin Layer

A 45% by mass silicone resin (a resin solid content) as a heat-resistant resin, 25% by mass non-surface-coated titanium oxide, a 2.5% by mass black inorganic pigment, and a 27.5% by mass extender pigment (talc) were mixed to prepare a heat-resistant coating material (a paste). Next, the prepared heat-resistant coating material was screen-printed to a thickness of 8 µm on the first heat-resistant resin layer. Thereafter, the heat-resistant coating material was fired at 300°C for ten minutes, thus forming a gray second heat-resistant resin layer.

As the non-surface-coated titanium oxide, anatase titanium oxide (item number "A-100" manufactured by Ishihara Sangyo Kaisha, Ltd.) was used. The average particle diameter of the titanium oxide was 0.15 µm.

In the above manner, a pink heat-resistant glass with a decorated layer provided on the one principal surface of the glass substrate was obtained.

### (Examples 9 to 13 and Comparative Example 5)

In Examples 9 to 13 and Comparative Example 5, an inorganic layer, a first heat-resistant resin layer, and a second heat-resistant resin layer were produced by changing respective titanium oxides contained in the inorganic layer, the first heat-resistant resin layer, and the second heat-resistant resin layer in Example 8 to those described in Table 5. A pink heat-resistant glass was obtained otherwise in the same manner as in Example 8. In the table, Titanium Oxide 1 refers to surface-coated titanium oxide in which the surface of rutile titanium oxide is coated with a film stack of aluminum oxide and zirconium oxide (item number "CR-97" manufactured by Ishihara Sangyo Kaisha, Ltd.), and Titanium Oxide 2 refers to anatase titanium oxide (item number "A-100" manufactured by Ishihara Sangyo Kaisha, Ltd.).

### (Evaluations)

The obtained heat-resistant glasses underwent a heat resistance test in which they were heated at 350°C for 100 hours, and were measured in terms of the L* value, the a* value, and the b* value in the L*a*b* color system before and after the heat resistance test. Furthermore, the color difference ΔE between before and after the heat resistance test of each of the heat-resistant glasses was determined. The L* value, the a* value, and the b* value in the L*a*b* color system were evaluated with a colorimeter ("CM-600d" manufactured by Konica Minolta, Inc.) from the glass side of the glass substrate in conformity with JIS Z 8722:2009. The results are shown in Table 5 below.

**[Table 5]**

| | | Example 8 | Example 9 | Example 10 | Example 11 | Example 12 | Example 13 | Comparative Example 5 |
|---|---|---|---|---|---|---|---|---|
| Inorganic Layer | | Titanium Oxide 1 | Titanium Oxide 1 | Titanium Oxide 1 | Titanium Oxide 1 | Titanium Oxide 2 | Titanium Oxide 2 | Titanium Oxide 2 |
| First Heat-Resistant Resin Layer | | Titanium Oxide 2 | Titanium Oxide 2 | Titanium Oxide 1 | Titanium Oxide 1 | Titanium Oxide 2 | Titanium Oxide 1 | Titanium Oxide 2 |
| Second Heat-Resistant Resin Layer | | Titanium Oxide 2 | Titanium Oxide 1 | Titanium Oxide 2 | Titanium Oxide 1 | Titanium Oxide 1 | Titanium Oxide 2 | Titanium Oxide 2 |
| Before Heat Resistance Test | L* | 59.8 | 59.84 | 60.18 | 60.11 | 59.29 | 59.56 | 59.18 |
| | a* | 2.45 | 2.61 | 2.84 | 2.87 | 3.43 | 3.63 | 3.37 |
| | b* | 4.36 | 4.51 | 4.93 | 4.92 | 3.31 | 3.84 | 3.2 |
| After Heat Resistance Test | L* | 62.62 | 62.66 | 62.97 | 62.99 | 62.6 | 62.8 | 62.62 |
| | a* | 1.6 | 1.75 | 2.05 | 2.05 | 1.94 | 2.07 | 1.79 |
| | b* | 5.01 | 5.13 | 5.26 | 5.27 | 4.14 | 4.61 | 4.12 |
| Amount of Change | Δ L* | 2.82 | 2.82 | 2.79 | 2.88 | 3.31 | 3.24 | 3.44 |
| | Δ a* | -0.85 | -0.86 | -0.79 | -0.82 | -1.49 | -1.56 | -1.58 |
| | Δ b* | 0.65 | 0.62 | 0.33 | 0.35 | 0.83 | 0.77 | 0.92 |
| | 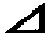 E | 3.02 | 3.01 | 2.92 | 3.01 | 3.72 | 3.68 | 3.90 |

As is obvious from Table 5, it can be seen that when surface-coated titanium oxide is contained in the decorated layer, the discoloration of the decorated layer can be suppressed.

### [Reference Signs List]

1, 21, 31 ... top plate for a cooker
2 ... glass substrate
2a ... cooking surface
2b ... back surface
3, 23, 33 ... decorated layer
4 ... inorganic layer
5, 35 ... heat-resistant resin layer
25A ... first heat-resistant resin layer
25B ... second heat-resistant resin layer

## Claims

1. A heat-resistant glass for use in a heating cooker, the heat-resistant glass comprising:
a glass substrate; and
a decorated layer provided on one of principal surfaces of the glass substrate,
the decorated layer comprising:
a heat-resistant resin layer; and
surface-coated titanium oxide including titanium oxide and a coating layer at least partially coating a surface of the titanium oxide.

2. The heat-resistant glass according to claim 1, wherein
the decorated layer includes an inorganic layer provided on the one principal surface of the glass substrate, and
the heat-resistant resin layer is provided on the inorganic layer.

3. The heat-resistant glass according to claim 2, wherein the inorganic layer contains the surface-coated titanium oxide.

4. The heat-resistant glass according to any one of claims 1 to 3, wherein the heat-resistant resin layer contains the surface-coated titanium oxide.

5. The heat-resistant glass according to any one of claims 1 to 3, wherein the coating layer is made of an inorganic material.

6. The heat-resistant glass according to any one of claims 1 to 3, wherein the coating layer is substantially free of organic component.

7. The heat-resistant glass according to any one of claims 1 to 3, wherein the coating layer contains at least one of Al and Zr.

8. The heat-resistant glass according to any one of claims 1 to 3, wherein the coating layer is made of aluminum oxide and zirconium oxide.

9. The heat-resistant glass according to any one of claims 1 to 3, wherein the titanium oxide is rutile titanium oxide.

10. The heat-resistant glass according to claim 3, wherein a content of the surface-coated titanium oxide in the inorganic layer is not less than 1% by mass and not more than 80% by mass.

11. The heat-resistant glass according to any one of claims 1 to 3, wherein the heat-resistant resin layer contains a silicone resin and a color pigment.

12. The heat-resistant glass according to any one of claims 1 to 3, having an L* value of 50 or more, an a* value of 20 or less, and a b* value of 20 or less in an L*a*b* color system.

13. The heat-resistant glass according to any one of claims 1 to 3, wherein the decorated layer is provided on a side of the heat-resistant glass close to a heating device of the heating cooker.

14. A top plate for a cooker, the top plate being made of the heat-resistant glass according to any one of claims 1 to 3,
the glass substrate having: a cooking surface on which a cooking utensil is to be put; and a back surface on an opposite side to the cooking surface, and
the decorated layer being provided on the back surface of the glass substrate.
